# EUROPEAN PATENT SPECIFICATION

(11) **EP 3 246 660 B1**
(45) Date of publication and mention of the grant of the patent: **30.10.2019**
(21) Application number: 16170479.6
(22) Date of filing: 19.05.2016
(51) Int. Cl.: G01C 15/02, G01C 1/04, G01C 15/00, G06T 7/73

(54) **SYSTEM AND METHOD FOR REFERENCING A DISPLAYING DEVICE RELATIVE TO A SURVEYING INSTRUMENT**
SYSTEM UND VERFAHREN ZUR REFERENZIERUNG EINER ANZEIGEVORRICHTUNG RELATIV ZU EINEM ÜBERWACHUNGSINSTRUMENT
SYSTÈME ET PROCÉDÉ PERMETTANT DE RÉFÉRENCER UN DISPOSITIF D'AFFICHAGE PAR RAPPORT À UN INSTRUMENT DE SURVEILLANCE

(43) Date of publication of application: 22.11.2017
(73) Proprietor: Hexagon Technology Center GmbH, 9435 Heerbrugg (CH)
(72) Inventor: METZLER, Bernhard, 6850 Dornbirn (AT); REIMANN, Bernd, 9435 Heerbrugg (CH); NEIER, Gunnar, 6850 Dornbirn (AT)
(74) Representative: Kaminski Harmann

(56) References cited:
- EP-A1- 2 431 708
- EP-A1- 3 086 283
- US-A1- 2003 014 212
- US-A1- 2012 319 949
- US-A1- 2013 100 279
- US-B1- 8 531 519
- Stéphane Côté ET AL: "Accurate OnSite Georeferenced Subsurface Utility Model Visualisation" In: "Network and Parallel Computing", 1 January 2015 (2015-01-01), Springer International Publishing, Cham 032548, XP055320919, ISSN: 0302-9743 ISBN: 978-3-642-36762-5 vol. 9254, pages 63-70, DOI: 10.1007/978-3-319-22888-4_6, * the whole document *

## Description

The invention relates to a system and a method for referencing displaying devices, such as glasses, smart phones or tablet PCs to a surveying instrument, such as a terrestrial laser scanner, a total station or a surveying pole.

To survey one, or in particular a plurality of target points in a scene, numerous geodetic survey instruments are well known from prior art. As standard spatial data, distance and direction, or solid angles, from a measuring apparatus to the target point to be surveyed, are recorded and, in particular, the absolute position of the measuring apparatus is acquired with the help of possibly existing reference points.

Today, widely known examples of such geodetic survey apparatuses consist of laser scanners, tachymeters or total stations, wherein the latter is also referred to as electronic tachymeters or computer tachymeters. A geodetic survey instrument of prior art is described, for example, in the publication document EP 1 686 350. Such apparatuses have electronic sensor angle and distance measurement functions, which allow the determination of direction and distance to a selected target point. The angle and distance quantities are in this case determined in the internal reference system of the apparatus and, for an absolute position determination, may possibly also be correlated with an external reference system.

In many geodetic applications, points are surveyed by placing specially configured target objects at them. These usually consist of a pole having a targetable marking or a reflector for defining the measurement distance, or the measurement point considering an offset which is the distance between the marking or reflector and the tip of the pole pointing at the measurement point. Using a central geodetic surveying instrument, even a relatively large number of target objects can therefore be surveyed, although this requires them being identified.

EP 2 431 708 A1 shows a surveying pole comprising a camera that captures a ground section underneath the surveying pole including the pointing tip of the surveying pole. A computing unit can consequently correlate coordinates measured with the surveying pole with image data captured with the camera. This configuration aims at improving a stake-out process.

Also known from prior art are surveying poles operating independently and therefore not reliant on before mentioned geodetic instrument. These poles usually comprise a global navigation satellite system receiver for locating the pole and supporting measurements of target points. Furthermore, they may comprise various sensors, like cameras, accelerometers, gyroscopes, compasses, etc. Insofar, the surveying pole may be understood as a surveying instrument itself when being capable of generating geodata through independent measurements.

However, in survey tasks involving a pole cooperating with a geodetic measurement device, various data, like instructions, words or other information may need to be communicated between the target object (the surveying pole) and the central geodetic surveying instrument, e.g. with wireless technology, in order to control or support the measurement process, and to establish or register measurement parameters. Examples of such data are the identification of the target object, inclination of the pole, height of the reflector above ground, reflector constants or measurement values such as temperature or air pressure.

Modern total stations have microprocessors for the digital post-processing and storage of acquired measurement data, and so do modern surveying poles.

The instruments are generally produced in a compact and integrated design, usually with coaxial distance and angle measurement elements as well as calculation, control and storage units integrated in the instruments. Depending on the development level of the total station, means for motorizing the target optics, for reflectorless distance measurement, for automatic target search and tracking and for remote control of the entire instrument are integrated.

Total stations known from prior art furthermore have a radio data interface (or based on other wireless technology) for setting up a wireless link to external peripheral components, for example to a data acquisition device which, in particular, may be formed as a hand-held data logger, remote control unit, array processor, notebook, tablet PC, smart phone, glasses and/or helmet, the peripheral components being capable to graphically display information related to the measurements and therefore hereafter referred to as displaying device.

By means of the data interface, measurement data acquired and/or stored by the total station may be output e.g. to external post-processing; externally acquired measurement data may be read into the total station for storage and/or post-processing; remote control signals for remote control of the total station or of another external component, particularly in mobile field use, may be input or output, and control software may be transferred into the total station.

In order to generate a point cloud, with a geodetic measuring device, such as a terrestrial laser scanner or a total station, an object, an inside scene, such as a room in a building, or an outside scene, such as a landscape of interest may be scanned. Alternatively, for single point measurements, especially total stations, survey-grade GNSS systems and/or surveying poles are used. For providing the user with an image of the surrounding scene that is being surveyed, some of these instruments are equipped with a camera taking images in an "instrument-centric", static view. Furthermore, such instruments may also be equipped with a display showing this "instrument-centric" view.

In practice, however, a user standing remote from the instrument would benefit from viewing a "user-centric", live image from his point of view, without sacrificing the surveying information or supplementary information related thereto.

It is therefore an object of the present invention to provide an improved surveying method and system.

It is a further object of the invention to provide a surveying method and system with an improved user-friendliness.

These objects are achieved by the realisation of the features of the independent claims. Features which further develop the invention in an alternative or advantageous manner are described in the dependent patent claims.

The present invention provides a system and a method for image-based referencing a displaying device, e.g. a conventional hand-held surveying field controller, augmented reality glasses or helmet, tablet, smart phone, field-controller, with respect to a surveying instrument, e.g. total station, terrestrial laser scanner, GNSS pole. Such interrelating (referencing) of the pose and position of said displaying device and said surveying instrument is used for steering purposes, in particular also for visualisation, supervision, or surveying purposes.

With the displaying device being referenced with respect to the surveying instrument, data given in a coordinate system defined by the surveying instrument, e.g. measured three-dimensional points may be screened by the displaying device or overlaid on a live-image acquired with a camera of the display device.

Said displaying device may comprise:
- a camera for capturing images (e.g. RGB, IR, Hyperspectral) and/or videos,
- an integrated display or a projector for visualising images on a prism attached to the glasses, e.g. like it is known from prior art as a HUD (head-up display), or a head-mounted virtual retinal display,
- an eye tracker for monitoring the viewing direction of the user,
- a measurement unit for determining position and tilt of the device, comprising e.g.:
   ∘ an inertial measurement unit (accelerometers, gyroscopes, etc.),
   ∘ a GNSS sensor, and/or
   ∘ a compass,
- communication channels (WiFi, Bluetooth, etc.) for receiving and transmitting data, and
- a depth sensor or distance sensor.

Interrelating of a displaying device to a surveying instrument may be the basis for visualized support of measurements and supervision purposes as well as for surveying and steering tasks, wherein a user may control the surveying instrument with help of the displaying device. Further information related to single measured points, to a point cloud or to the instrument, 3D data or any other geo-referenced information or data provided by a third party may be visualized on the displaying devices at a specifically assigned position in space. The information may be linked to specific coordinates.

A terrestrial scanner as a surveying instrument enables the acquisition of millions of points in short time with very high accuracy. Alternatively, total stations or GNSS surveying system provide highly accurate single point measurements. However, if equipped with a camera, these instruments can only provide a static, instrument-centric image to a user occupying a viewpoint which is different from the viewpoint of the instrument.

According to the invention, the image taken by a camera integrated into the displaying device is processed with regard to an image obtained by a surveying instrument, and the difference between the viewpoints of both components are calculated regarding position and orientation. The image provided by the surveying instrument is to be understood as a two-dimensional or three-dimensional figure, which may by way of an example be a point cloud or any type of photograph.

A system and/or method according to the invention cannot only be applied for "passive" visualization and supervision purposes, but also for "active" surveying and steering tasks. To name one example, the surveying instrument can follow the orientation of the displaying device, and in this manner, a user can position the surveying instrument aiming towards a target of his demand. To name another example, surveyed geodata may be displayed on the displaying device, and by pointing the displaying device towards regions of interest, a user may check the completeness of a measurement task.

Use cases for common field tasks performed as a part of such applications include maintenance, outage management, on-site inspection, on-site verification of projected assets, as-built record keeping, decision support, network planning and documentation.

The invention relates to a method for interrelating a displaying device relative to a surveying instrument, said displaying device and surveying instrument being spatially separated from each other and comprising communication means to communicate with each other, the method comprising the steps:
- providing a first image generated with the surveying instrument and providing a second image generated with the displaying device, wherein the first image and the second image at least in part cover the same scenery,
- detecting corresponding features in the first image and in the second image (20) with a processing unit,
- deriving a set of transition parameters based at least in part on the corresponding features with said processing unit,
- referencing the displaying device relative to the surveying instrument regarding position and orientation based at least in part on the set of parameters with said processing unit to determine a pose of the displaying device with respect to the surveying instrument,
- based on the pose of the displaying device with respect to the surveying instrument, generating control commands with the displaying device, and
- with the control commands, controlling an orientation of the surveying instrument or a trigger of a measurement to be performed by the surveying instrument.

In an embodiment of the method according to the invention, in the step of detecting corresponding features, the processing unit is using a feature matching algorithm, in particular in combination with a feature tracking algorithm.

In another embodiment of the method according to the invention, the surveying instrument comprises means for capturing photos, and particularly wherein the first image is a photo, in particular a panoramic photo or photo-mosaic.

In a further embodiment of the method according to the invention, the surveying instrument comprises means for providing a three-dimensional point cloud and/or single points, in particular wherein the first image is based at least in part on the point cloud and/or the single points.

In a further embodiment of the method according to the invention, the displaying device comprises means for capturing photos or videos, and particularly wherein the second image is a photo, or at least part of a video.

In a further embodiment of the method according to the invention, the displaying device comprises a screen or a projector for displaying one or more of:
- the first image (10),
- the second image (20),
- a live image captured by the means for capturing photos or videos comprised by the surveying instrument or the displaying device,
- a three-dimensional point cloud (4), and
- single points,
in particular wherein the displaying is perspectively adapted to the position and orientation of the displaying device.

In a further embodiment of the method according to the invention, the method comprises the step of displaying, or overlaying a live image with, information related to a three-dimensional point cloud and/or single points.

In a further embodiment of the method according to the invention, the information are
- symbols representing geodata, wherein the geodata comprise the three-dimensional point cloud, the single points and/or points to be staked-out, and/or
- supplementary data with georeference.

In a further embodiment of the method according to the invention, the displaying device and/or the surveying instrument comprise a sensor unit providing sensor data regarding position and/or orientation of the displaying device relative to the surveying instrument for improving the set of transition parameters, and wherein the step of referencing the displaying device relative to the surveying instrument is further based on said sensor data.

In a further embodiment of the method according to the invention, the sensor unit comprises one or more of:
- an inertial measurement unit, particularly comprising an accelerometer and/or a gyroscope,
- a depth sensor,
- a distance sensor,
- a Global Navigation Satellite System (GNSS) receiver,
- a compass.

In case a sensor unit of the surveying instrument or a sensor unit of the displaying device has more than one of the listed sensors, a sensor fusion may be realized in order to improve the feature matching algorithm and/or the feature tracking algorithm.

In a further embodiment of the method according to the invention, the surveying instrument is one of:
- a total station,
- a laser scanner,
- a GNSS surveying pole,
- a mobile mapping system, in particular a mobile mapping backpack,
and wherein the displaying device (2) is one of:
- a tablet computer,
- a smart phone,
- a field controller,
- augmented, mixed or virtual reality glasses,
- a helmet with head-up-display.

An exemplary mobile mapping backpack is the Leica Pegasus:Backpack, which can be worn by a user walking around an area to be surveyed. A sensor unit comprising several sensors captures a full 360° spherical view of the environment and automatically creates a 3D model out of it.

In a further embodiment of the method according to the invention, the displaying device comprises an eye tracker.

Said eye tracker observes the current viewing direction of a user and may for this purpose be mounted on a surface of a smart phone facing the user, or on virtual reality glasses, or on a visor of a helmet. With information on the viewing direction of a user, screening or projecting of referenced information may be optimised.

In a further embodiment of the method according to the invention, the step of referencing the displaying device relative to the surveying instrument, and/or the step of providing a first image and a second image are performed by making use of the principle of
- image resection,
- structure from motion, or
- simultaneous localization and mapping (SLAM).

The invention further relates to a system for performing the steps of a method according to the invention, said system comprising
- a surveying instrument,
- a displaying device,
- a processing unit.

For example, said processing unit may comprise sub-processing units which are comprised by one or more of
- the surveying instrument,
- the displaying device,
- a remote device,
- a cloud computer.

In the following, the invention will be described in detail by referring to exemplary embodiments that are accompanied by figures, in which:
- Fig. 1:: shows an embodiment of a system according to the invention and a snapshot of a situation in which part of a method according to the invention is carried out;
- Fig. 2:: shows another embodiment of a system according to the invention and a snapshot of a situation in which part of a method according to the invention is carried out;
- Fig. 3:: shows another embodiment of a system according to the invention and a snapshot of a situation in which part of a method according to the invention is carried out;
- Fig. 4:: shows yet another embodiment of a system according to the invention and a snapshot of a situation in which part of a method according to the invention is carried out;
- Fig. 5:: shows one embodiment of a system according to the invention and a snapshot of a situation in which a method according to the invention is carried out;
- Fig. 6:: shows an embodiment of a system according to the invention and a snapshot of a situation in which part of a method according to the invention is carried out;
- Fig. 7:: shows a further embodiment of a system according to the invention and a snapshot of a situation in which a method according to the invention is carried out;
- Fig. 8:: shows one embodiment of a system according to the invention and a snapshot of a situation in which part of a method according to the invention is carried out;

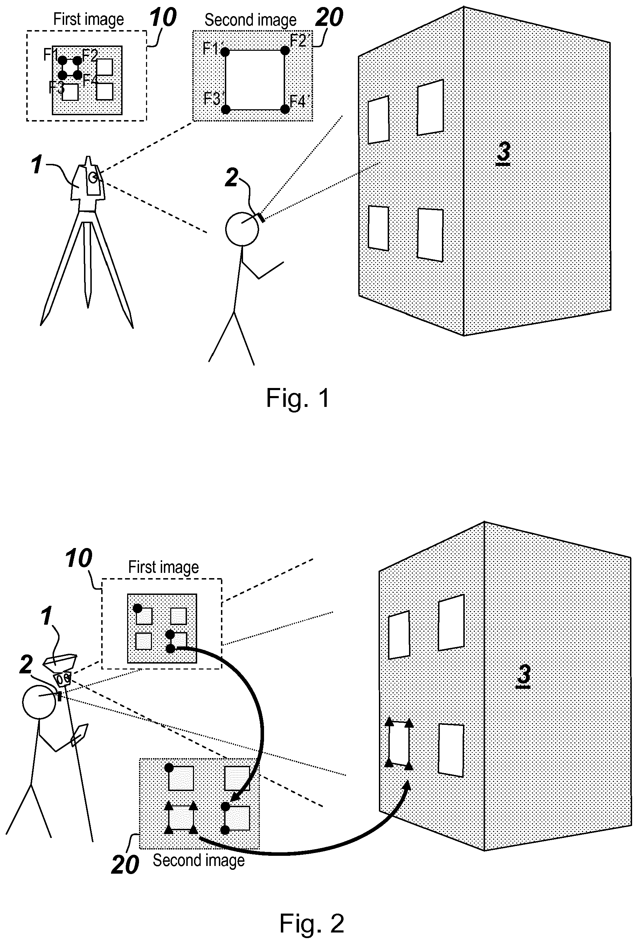

As shown in figure 1, within the first to the second image a set of homologous points is identified. In the shown example, the corner points of a window have been pointed out as observed both in the first image of the surveying instrument (denoted by F1, F2, F3 and F4) and also in the second image of the camera associated to the displaying device (denoted by F1', F2', F3' and F4'). The first image may be at least a part of a 3D point cloud or a photo or part of a video captured by a camera mounted on or in the surveying instrument.

Referencing the displaying device (an optical head-mounted display typically worn like a pair of eyeglasses) to the surveying instrument (a total station) is based on calculating the difference in position and orientation recognized in the first and the second image by making use of the homologous points and the perspective distortion of their locations.

The internal coordinate system of the surveying instrument and the coordinate system of the displaying device may be interrelated to each other. They also may be put into correlation with regard to an external absolute reference system, such as WGS84 for example. An algorithm may determine the position offset (3 translations) and/or the orientation offset (3 rotations) in order to register the perspective of the displaying device in context of the coordinate frame defined by the surveying system (or vice versa).

For an optional specification of the calculation of the relative pose, it is also possible to additionally make use of information provided by one or more additional sensors being part of the method and/or system. Examples of such sensors may be,
- for information on position: GNSS sensor, accelerometer,
- for information on tilt angles: accelerometer, gyroscope, compass,
- for information on distances: distance and depth sensors.

In this case, a sensor fusion enables the provision of accurate values for the pose and the position of the device. Furthermore, only some of the degrees of freedom may need to be provided by the above described referencing method, whereas the other degrees of freedom could be measured by the device directly with the assigned separate sensors.

The referencing calculation may be carried out by a processing unit which may be comprised by one of the following components: the displaying device, the surveying instrument, a separate local computer, a remote server, a cloud computer; in this understanding, the processing unit is a tangible single unit. However alternatively, two or more of said components may comprise tangible sub-processing units, said sub-processing units being comprised by the processing unit; in this understanding, the processing unit is a collective of sub-processing units.

For such purposes data can be communicated and shared between the displaying device, the surveying instrument and any further involved devices by making use of communication channels (such as Wi-Fi, Bluetooth, data cable, etc.).

The determination of the position and orientation offset is at least in part based on the identification of homologous points in the image taken with the displaying device, i.e. a first set of points, and the image taken with the surveying instrument, i.e. a second corresponding set of points.

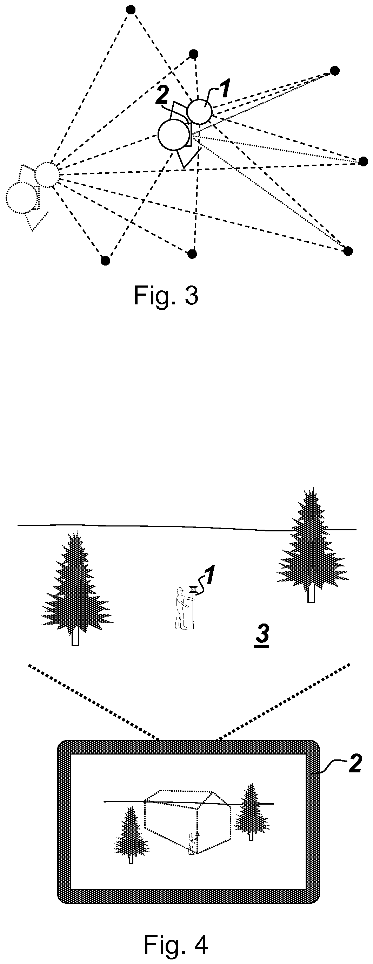

The determination of the pose of the glasses may further be based on 3D points of a SLAM (Simultaneous Localization and Mapping) point cloud. These SLAM points may be generated by forward intersection from images acquired with the camera of a GNSS pole (surveying instrument), see figure 2. For the determination of the pose of the glasses (displaying device) an image with the camera of the glasses is taken. Homologous points in the image from the glasses and the images from the GNSS pole are identified, e.g. by feature matching (SIFT, SURF, etc.). The pose of the glasses is computed based on known 3D coordinates corresponding to the homologous points, e.g. by resection, which is shown in figure 3.

In case only image data but no 3D-information are available, e.g. when matching a panorama image acquired with a terrestrial laser scanner with an image acquired with glasses or a tablet, the pose may be determined approximately only. In this constellation, only the direction of the position offset may be determined but not the magnitude of the position offset. In cases the position of the displaying device (e.g. glasses, tablet) is close to the surveying instrument, the position offset can be ignored completely. This is especially true when no relevant objects are located close to the surveying instrument (and the displaying device).

In other words, the reprojection error in the image of the displaying device for 3D points given in the coordinate system of the surveying system is small when the distance between the surveying instrument and displaying device is small and the 3D points are far away.

Alternatively, estimated values for the object distance and/or the position offset magnitude can be used to further reduce the image reprojection error for the display device. A further alternative is a consideration of values from a depth- or distance-sensor in order to reduce or eliminate this image reprojection error, said sensor being integrated in the displaying device.

However, if scale is introduced, the entire pose (including a scaled position offset) can be determined. In practice, this can be achieved by measuring the 3D coordinates of points identified in the images with the surveying instrument or if 3D information can be derived from a given, already measured point cloud, or from a CAD object which is identified in the images.

According to the invention, the first image may be continuously updated by the surveying instrument. When the environment changes (for example by a car that drives off, or a building crane changes its position), real-time referencing between the surveying instrument and the displaying device is ensured without disturbances. Due to object presence differences some features may otherwise not be able to be matched.

In another embodiment of the invention, instead of homologous points, line features or image patches are used to match the images of the displaying device and the surveying instrument. In yet another embodiment of the invention, instead of homologous points, vanishing points are used to determine only the orientation difference between the displaying device and the surveying instrument. The position offset, then, is assumed zero.

According to one aspect of the invention, stakeout points may be projected on the displaying device and be overlaid on the display screen with the live view (see figure 4). This allows for highlighting those locations where a surveying pole needs to be placed by a user.

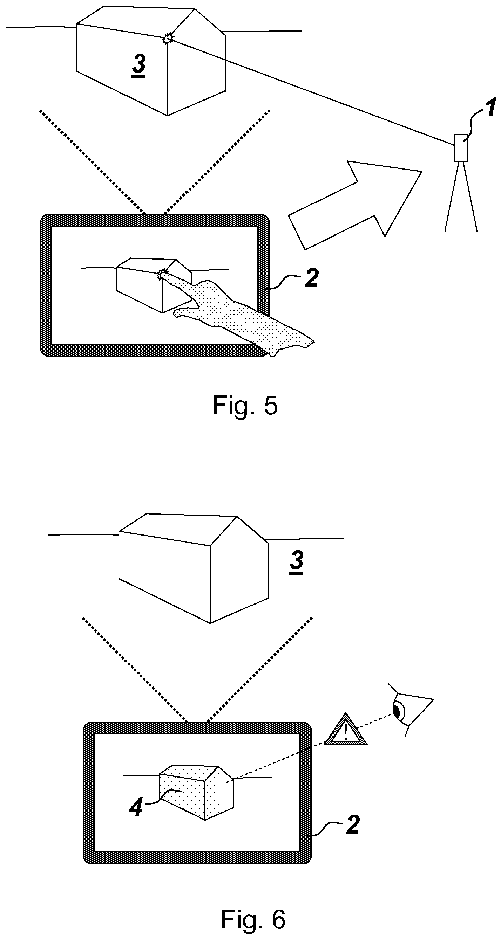

According to another aspect of the invention, the coordinates of already measured single points, or point clouds, or an already measured part of a point cloud which is currently being generated could be - apart from being utilised for the referencing - displayed on the displaying device. The surveying instrument optionally also has a camera for capturing images which as well may be used for referencing the instrument relative to the device, and for displaying the captured images or part of the captured images on the displaying device in a spatially referenced manner. Such an augmented reality image allows the user e.g. to perform a visual progress check or completeness check of a surveying task while the task is or after the task has been carried out (see figure 6). In case of a point cloud scanned by a laser scanner, this could give the user an early visual indication of gaps in the point cloud (indicated in fig. 6 by the exclamation mark) in order to allow the user to refine or redo the scanning.

According to another aspect of this invention, an image of a scanned point cloud and/or single point measurements, or a model thereof indicating e.g. building and vegetation layers or also additional data, may be projected onto the displaying device or displayed as overlay on the screen with the live view. Some examples are:
- Visualization of building plans to allow for a comparison "planned vs. as-built" e.g. for constructors, architects, etc.
- Visualization of hidden structures e.g. pipes or electrical wiring inside walls

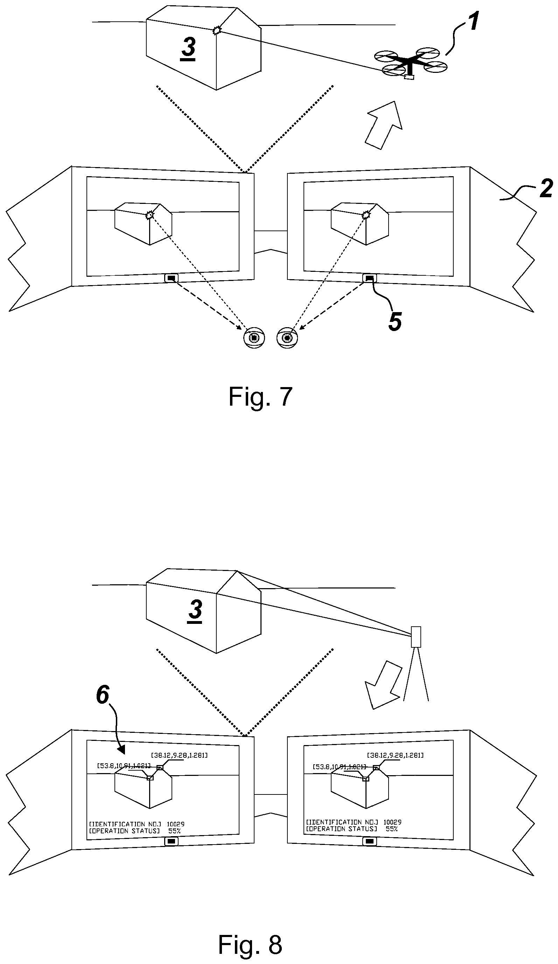

According to another aspect of the invention, instead of or in addition to measured points also labels or additional pieces of information on the surveying task may be displayed on the displaying device (see figure 8). Some examples are:
- Information such as name, identification number or type,
- previously measured values of marker or measurement points,
- information on the operation status of the surveying instruments and the scanning process; and
- information on automatically assigned feature class for a check by the user if scanned objects have been correctly classified.

According to an embodiment of the invention, for a given surveying task a user could walk with augmented reality glasses containing an eye tracker through the measurement site and "view" the objects of particular interest. Using the described referencing method, the pose of the user('s glasses) can be calculated along this trajectory as well as - using information from the eye tracker - the rough 3D positions of the objects of interest. An unmanned aerial vehicle (UAV) or unmanned ground vehicle (UGV) can then be used to perform a detailed, high-resolution scan of those objects of interest. Such process allows for reduced ("also hands-free") on-site work of the user and efficient flight planning in case of a UAV or terrestrial path planning in case of a UGV. Alternatively, a tapping command applied by the hand of the user on a tablet pc (see figure 5), or the targeting of a feature or region with the viewing direction of a user can command the UAV or UGV to perform the detailed scan of the object tapped on the display (see figure 7).

According to another embodiment of the invention, given the pose of the glasses with respect to the coordinate system of e.g. the laser scanner, either the angles of the displaying device itself or the viewing direction of the user as determined by an eye tracking sensor located in the glasses may be used to steer the surveying instrument. When controlled in such a way, the instrument would point e.g. towards the same object as the user is looking to or heading, respectively.

According to yet another embodiment of the invention, a user may steer the surveying process by contactless hand gestures. These gestures may be recorded by the camera of the displaying device and translated into meaningful commands for the surveying instrument by a processing unit which is located for example in the displaying device or in the surveying instrument. By doing so, the user may define the scanning window by pointing with his fingers to the upper left and the lower right corner of the area to be scanned or point to the coordinates to be measured as single-points.

According to another aspect of the invention, the previously mentioned workflows and applications are combinable in order to provide the user with a combination of different augmented reality visions. Here, the user may select the augmented image to be visualized by providing input
- manually on the displaying device, on the surveying instrument or on a peripheral system (e.g. on a keyboard, touch pad, mouse), or
- by hand gestures detected and interpreted by the displaying device or by the surveying instrument, or
- by his viewing direction or head direction detected by the displaying device or by the surveying instrument.

According to another aspect of the invention, the user may face (in case of glasses) a surveying instrument or may direct another displaying device (e.g. tablet pc) at the surveying instrument, and the glasses then visualize, by displaying, the scanner's operating status and instructions, whereas when looking/directing in the direction of objects to be scanned or already scanned, the displaying device may display the scanned point cloud, alternatively along with text labels, indicating e.g. the objects' class.

Although the invention is illustrated above, partly with reference to some preferred embodiments, it must be understood that numerous modifications and combinations of different features of the embodiments can be made.

## Claims

1. Method for interrelating a displaying device (2) relative to a surveying instrument (1) for the purpose of steering the surveying instrument with the displaying device, said displaying device (2) and surveying instrument (1) being spatially separated from each other and comprising communication means to communicate with each other, the method comprising the steps:
• providing a first image (10) generated with the surveying instrument (1) and providing a second image (20) generated with the displaying device (2), wherein the first image (10) and the second image (20) at least in part cover the same scenery (3),
• detecting corresponding features (F1,F2,F3,F4,F1',F2',F3',F4') in the first image (10) and in the second image (20) with a processing unit,
• deriving a set of transition parameters based at least in part on the corresponding features (F1,F2,F3,F4,F1',F2',F3',F4') with said processing unit,
• referencing the displaying device (2) relative to the surveying instrument (1) regarding position and orientation based at least in part on the set of parameters with said processing unit to determine a pose of the displaying device (2) with respect to the surveying instrument (1),
• based on the pose of the displaying device (2) with respect to the surveying instrument (1), generating control commands with the displaying device, and
• with the control commands, controlling an orientation of the surveying instrument or a trigger of a measurement to be performed by the surveying instrument (1).

2. Method according to claim 1,
wherein in the step of detecting corresponding features, the processing unit is using a feature matching algorithm, in particular in combination with a feature tracking algorithm.

3. Method according to any of the preceding claims,
wherein the surveying instrument (1) comprises means for capturing photos, and particularly wherein the first image (10) is a photo, in particular a panoramic photo or photo-mosaic.

4. Method according to any of the preceding claims,
wherein the surveying instrument (1) comprises means for providing a three-dimensional point cloud (4) and/or single points, in particular wherein the first image (10) is based at least in part on the point cloud and/or the single points.

5. Method according to any of the preceding claims,
wherein the displaying device (2) comprises means for capturing photos or videos, and particularly wherein the second image (20) is a photo, or at least part of a video.

6. Method according to claim 5,
wherein the displaying device (2) comprises a screen or a projector for displaying one or more of:
• the first image (10),
• the second image (20),
• a live image captured by the means for capturing photos or videos comprised by the surveying instrument or the displaying device,
• a three-dimensional point cloud (4), and
• single points,
in particular wherein the displaying is perspectively adapted to the position and orientation of the displaying device (2).

7. Method according to claim 6,
further comprising the step of displaying, or overlaying a live image with, information (6) related to a three-dimensional point cloud and/or single points.

8. Method according to claim 7,
wherein the information (6) are
• symbols representing geodata, wherein the geodata comprise a three-dimensional point cloud (4), single points and/or points to be staked-out, and/or
• supplementary data with georeference.

9. Method according to any of the preceding claims,
wherein the displaying device (2) and/or the surveying instrument (1) comprise a sensor unit providing sensor data regarding position and/or orientation of the displaying device (2) relative to the surveying instrument (1) for improving the set of transition parameters, and wherein the step of referencing the displaying device (2) relative to the surveying instrument (1) is further based on said sensor data.

10. Method according to claim 9,
wherein the sensor unit comprises one or more of:
• an inertial measurement unit, particularly comprising an accelerometer and/or a gyroscope,
• a depth sensor,
• a distance sensor,
• a Global Navigation Satellite System (GNSS) receiver,
• a compass.

11. Method according to any of the preceding claims, wherein the surveying instrument (1) is one of:
• a total station,
• a laser scanner,
• a GNSS surveying pole,
• a mobile mapping system, in particular a mobile mapping backpack, and wherein the displaying device (2) is one of:
• a tablet computer,
• a smart phone,
• a field controller,
• augmented, mixed or virtual reality glasses,
• a helmet with head-up-display.

12. Method according to one of the preceding claims,
wherein the displaying device (2) comprises an eye tracker (5).

13. Method according to one of the preceding claims,
wherein the step of referencing the displaying device (2) relative to the surveying instrument (1), and/or the step of providing a first image (10) and a second image (20), are performed by making use of the principle of
• image resection,
• structure from motion, or
• simultaneous localisation and mapping (SLAM).

14. System for performing the steps of a method according to any of the claims 1 to 13, the system comprising
• the surveying instrument (1),
• the displaying device (2), and
• the processing unit.

## Patentansprüche

1. Verfahren zum Verknüpfen einer Anzeigevorrichtung (2) relativ zu einem Überwachungsinstrument (1) für die Zwecke des Lenkens des Überwachungsinstruments mit der Anzeigevorrichtung, wobei die Anzeigevorrichtung (2) und das Überwachungsinstrument (1) räumlich voneinander getrennt sind und Kommunikationsmittel beinhalten, um miteinander zu kommunizieren, wobei das Verfahren die folgenden Schritte umfasst:
• Bereitstellen eines ersten Bilds (10), das mit dem Überwachungsinstrument (1) erzeugt ist, und Bereitstellen eines zweiten Bilds (20), das mit der Anzeigevorrichtung (2) erzeugt ist, wobei das erste Bild (10) und das zweite Bild (20) mindestens teilweise dieselbe Umgebung (3) abdecken,
• Detektieren entsprechender Merkmale (F1, F2, F3, F4, F1', F2', F3', F4') in dem ersten Bild (10) und in dem zweiten Bild (20) mit einer Verarbeitungseinheit,
• Ableiten eines Satzes von Übergangsparametern auf Grundlage von mindestens teilweise der entsprechenden Merkmale (F1, F2, F3, F4, F1', F2', F3', F4') mit der Verarbeitungseinheit,
• Referenzieren der Anzeigevorrichtung (2) relativ zu dem Überwachungsinstrument (1) in Bezug auf Position und Ausrichtung auf Grundlage von mindestens teilweise dem Satz von Parametern mit der Verarbeitungseinheit, um eine Stellung der Anzeigevorrichtung (2) in Bezug auf das Überwachungsinstrument (1) zu bestimmen,
• auf Grundlage der Stellung der Anzeigevorrichtung (2) in Bezug auf das Überwachungsinstrument (1), Erzeugen von Steuerbefehlen mit der Anzeigevorrichtung, und
• mit den Steuerbefehlen, Steuern einer Ausrichtung des Überwachungsinstruments oder eines Auslösers einer Messung, die durch das Überwachungsinstrument (1) durchgeführt werden soll.

2. Verfahren nach Anspruch 1, wobei bei dem Schritt des Detektierens von entsprechenden Merkmalen die Verarbeitungseinheit einen Merkmalabgleichalgorithmus verwendet, insbesondere in Kombination mit einem Merkmalnachverfolgungsalgorithmus.

3. Verfahren nach einem der vorhergehenden Ansprüche, wobei das Überwachungsinstrument (1) Mittel zum Aufnehmen von Fotos umfasst und wobei das erste Bild (10) insbesondere ein Foto ist, insbesondere ein panoramisches Foto oder ein Foto-Mosaik.

4. Verfahren nach einem der vorhergehenden Ansprüche, wobei das Überwachungsinstrument (1) Mittel zum Bereitstellen einer dreidimensionalen Punktewolke (4) und/oder einzelner Punkte umfasst, wobei das erste Bild (10) insbesondere mindestens teilweise auf der Punktewolke und/oder den einzelnen Punkten beruht.

5. Verfahren nach einem der vorhergehenden Ansprüche, wobei die Anzeigevorrichtung (2) Mittel zum Aufnehmen von Fotos oder Videos umfasst und wobei das zweite Bild (20) insbesondere ein Foto ist oder mindestens Teil eines Videos ist.

6. Verfahren nach Anspruch 5, wobei die Anzeigevorrichtung (2) einen Bildschirm oder einen Projektor zum Anzeigen von einem oder mehreren der Folgenden umfasst:
• dem ersten Bild (10),
• dem zweiten Bild (20),
• einem Live-Bild, das durch die Mittel zum Aufnehmen von Fotos oder Videos aufgenommen wurde, die durch das Überwachungsinstrument oder die Anzeigevorrichtung umfasst sind,
• eine dreidimensionale Punktewolke (4) und
• einzelne Punkte,
wobei das Anzeigen insbesondere perspektivisch an die Position und Ausrichtung der Anzeigevorrichtung (2) angepasst ist.

7. Verfahren nach Anspruch 6, das ferner den Schritt des Anzeigens von, oder Überlagerns eines Live-Bildes mit, Informationen (6) umfasst, die sich auf eine dreidimensionale Punktewolke und/oder einzelne Punkte beziehen.

8. Verfahren nach Anspruch 7, wobei die Informationen (6) Folgendes sind:
• Symbole, die Geodaten darstellen, wobei die Geodaten eine dreidimensionale Punktewolke (4), einzelne Punkte und/oder Punkte, die observiert werden sollen, umfassen, und/oder
• Zusätzliche Daten mit Georeferenz.

9. Verfahren nach einem der vorhergehenden Ansprüche, wobei die Anzeigevorrichtung (2) und/oder das Überwachungsinstrument (1) eine Sensoreinheit umfasst, die Sensordaten in Bezug auf die Position und/oder Ausrichtung der Anzeigevorrichtung (2) relativ zu dem Überwachungsinstrument (1) zum Verbessern des Satzes von Überwachungsparametern umfassen und wobei der Schritt des Referenzierens der Anzeigevorrichtung (2) relativ zu dem Überwachungsinstrument (1) ferner auf den Sensordaten beruht.

10. Verfahren nach Anspruch 9, wobei die Sensoreinheit eines oder mehrere der Folgenden umfasst:
• eine Trägheitsmesseinheit, die insbesondere einen Beschleunigungsmesser und/oder ein Gyroskop umfasst,
• einen Tiefensensor,
• einen Entfernungssensor,
• einen Empfänger eines globalen Navigationssatellitensystems (GNSS),
• einen Kompass.

11. Verfahren nach einem der vorhergehenden Ansprüche, wobei das Überwachungsinstrument (1) eines der Folgenden ist:
• eine Totalstation,
• ein Laserscanner,
• ein GNSS-Überwachungspol,
• ein mobiles Kartierungssystem, insbesondere ein mobiler Kartierungsrucksack,
und wobei die Anzeigevorrichtung (2) eines der Folgenden ist:
• ein Tablet-Computer,
• ein Smartphone,
• eine Feldsteuerung,
• eine Brille für erweiterte, gemischte oder virtuelle Realität,
• ein Helm mit einer Frontanzeige.

12. Verfahren nach einem der vorhergehenden Ansprüche, wobei die Anzeigevorrichtung (2) eine Nachverfolgungsvorrichtung für Augenbewegungen (5) umfasst.

13. Verfahren nach einem der vorhergehenden Ansprüche, wobei der Schritt des Referenzierens der Anzeigevorrichtung (2) relativ zu der Überwachungsvorrichtung (1) und/oder der Schritt des Bereitstellens eines ersten Bilds (10) und eines zweiten Bilds (20) durch Verwenden der folgenden Prinzipien durchgeführt sind:
• Bildresektion,
• Struktur-aus-Bewegung, oder
• gleichzeitige Lokalisierung und Kartierung (SLAM).

14. System zum Durchführen der Schritte eines Verfahrens nach einem der Ansprüche 1 bis 13, wobei das System Folgendes umfasst:
• das Überwachungsinstrument (1),
• die Anzeigevorrichtung (2), und
• die Verarbeitungseinheit.

## Revendications

1. Procédé destiné à mettre en relation un dispositif d'affichage (2) et un instrument d'arpentage (1) dans le but de diriger l'instrument d'arpentage au moyen du dispositif d'affichage, lesdits dispositif d'affichage (2) et instrument d'arpentage (1) étant séparés l'un de l'autre dans l'espace et comprenant des moyens de communication pour communiquer l'un avec l'autre, le procédé comportant les étapes consistant à :
• produire une première image (10) générée par l'instrument d'arpentage (1) et produire une seconde image (20) générée par le dispositif d'affichage (2), la première image (10) et la seconde image (20) couvrant au moins en partie la même scène (3),
• détecter, au moyen d'une unité de traitement, des éléments correspondants (F1, F2, F3, F4, F1', F2', F3', F4') dans la première image (10) et la seconde image (20),
• déduire, au moyen de ladite unité de traitement, un jeu de paramètres de transition en se basant au moins en partie sur les éléments correspondants (F1, F2, F3, F4, F1', F2', F3', F4'),
• référencer, au moyen de ladite unité de traitement, le dispositif d'affichage (2) par rapport à l'instrument d'arpentage (1), concernant sa position et son orientation, en se basant au moins en partie sur le jeu de paramètres, afin de déterminer une disposition du dispositif d'affichage (2) par rapport à l'instrument d'arpentage (1),
• à partir de ladite disposition du dispositif d'affichage (2) par rapport à l'instrument d'arpentage (1), générer des commandes de contrôle au moyen du dispositif d'affichage, et
• à partir desdites commandes de contrôle, contrôler une orientation de l'instrument d'arpentage ou le déclenchement d'une mesure que l'instrument d'arpentage (1) doit effectuer.

2. Procédé selon la revendication 1,
dans lequel, au cours de l'étape de détection d'éléments correspondants, l'unité de traitement utilise un algorithme de mise en correspondance d'élément, notamment combiné à un algorithme de suivi d'élément.

3. Procédé selon une quelconque des revendications précédentes,
dans lequel l'instrument d'arpentage (1) comporte des moyens de prise de photos, notamment dans lequel la première image (10) est une photo, notamment une photo panoramique ou une mosaïque de photos.

4. Procédé selon une quelconque des revendications précédentes,
dans lequel l'instrument d'arpentage (1) comporte des moyens de production d'un nuage de points tridimensionnels (4) et/ou de points uniques, notamment dans lequel la première image (10) est basée au moins en partie sur le nuage de points et/ou les points uniques.

5. Procédé selon une quelconque des revendications précédentes,
dans lequel le dispositif d'affichage (2) comporte des moyens de prise de photos ou de vidéos, notamment dans lequel la seconde image (20) est une photo, ou au moins une partie d'une vidéo.

6. Procédé selon la revendication 5,
dans lequel le dispositif d'affichage (2) comporte un écran ou un projecteur destiné à afficher un ou plusieurs objets parmi les suivants :
• la première image (10),
• la seconde image (20),
• une image en direct prise par les moyens de prise de photos ou de vidéos que comporte l'instrument d'arpentage ou le dispositif d'affichage,
• un nuage de points tridimensionnels (4), et
• des points uniques,
notamment dans lequel la perspective de l'affichage est adaptée à la position et à l'orientation du dispositif d'affichage (2).

7. Procédé selon la revendication 6,
comportant en outre l'étape d'affichage, ou de superposition à l'image en direct, d'informations (6) relatives à un nuage de points tridimensionnels et/ou à des points uniques.

8. Procédé selon la revendication 7,
dans lequel les informations (6) sont
• des symboles représentant des géodonnées, lesdites géodonnées comprenant un nuage de points tridimensionnels (4), des points uniques et/ou des points à délimiter, et/ou
• des données supplémentaires avec un géoréférencement.

9. Procédé selon une quelconque des revendications précédentes,
dans lequel le dispositif d'affichage (2) et/ou l'instrument d'arpentage (1) comportent une unité de captage produisant des données de captage relatives à la position et/ou à l'orientation du dispositif d'affichage (2) par rapport à l'instrument d'arpentage (1), destinées à améliorer le jeu de paramètres de transition, et dans lequel l'étape de référencement du dispositif d'affichage (2) par rapport à l'instrument d'arpentage (1) se base en outre sur lesdites données de captage.

10. Procédé selon la revendication 9,
dans lequel l'unité de captage comporte un ou plusieurs des objets suivants :
• une centrale inertielle, notamment comportant un accéléromètre et/ou un gyroscope,
• un capteur de profondeur,
• un capteur de distance,
• un récepteur GNSS (Global Navigation Satellite System, système de positionnement par satellites),
• une boussole.

11. Procédé selon une quelconque des revendications précédentes,
dans lequel l'instrument d'arpentage (1) est l'un des objets suivants :
• une station totale,
• un numériseur laser,
• un piquet d'arpentage GNSS,
• un système de cartographie mobile, notamment un sac à dos de cartographie mobile,
et dans lequel le dispositif d'affichage (2) est l'un des objets suivants :
• une tablette,
• un smartphone,
• un contrôleur de terrain,
• des lunettes de réalité augmentée, mixte ou virtuelle,
• un casque avec affichage tête haute.

12. Procédé selon une quelconque des revendications précédentes,
dans lequel le dispositif d'affichage (2) comporte un système de suivi oculaire (5).

13. Procédé selon une quelconque des revendications précédentes,
dans lequel l'étape de référencement du dispositif d'affichage (2) par rapport à l'instrument d'arpentage (1), et/ou l'étape de production d'une première image (10) et d'une seconde image (20), sont effectuées selon le principe
• de image resection,
• d'acquisition de structure par calcul de mouvement (SfM, structure from motion), ou
• de localisation et cartographie simultanées (SLAM).

14. Système destiné à effectuer les étapes d'un procédé selon une quelconque des revendications 1 à 13, ledit système comprenant
• l'instrument d'arpentage (1),
• le dispositif d'affichage (2), et
• l'unité de traitement.
